# EUROPÄISCHE PATENTANMELDUNG

(11) **EP 0 943 487 A2**
(43) Veröffentlichungstag der Anmeldung: **22.09.1999**
(21) Anmeldenummer: 99101368.1
(22) Anmeldetag: 26.01.1999
(51) Int. Cl.: B60N 2/28

(54) **Vorrichtung zum lösbaren Verbinden mit einem Bügel**

(30) Priorität: 02.02.1998 DE 19803645; 20.10.1998 DE 19848231
(71) Anmelder: Van Riesen GmbH u. Co. KG, D-32130 Enger (DE)
(72) Erfinder: Friedrich, Matthias, 32120 Hiddenhausen (DE); Wölfl, Volkmar-Rudolf, 32602 Vlotho (DE)
(74) Vertreter: Vollmann, Heiko, Dipl.-Ing.

(57) **Zusammenfassung**

Die Vorrichtung ist zum lösbaren Verbinden mit einem Bügel, insbesondere als Schloß für einen Aufsatz-Kindersitz vorgesehen. Sie weist einen Tragkörper (1) mit einer Öffnung (2) zur Aufnahme des Bügels (20) auf. Innerhalb des Tragkörpers ist ein Sperrkörper (5) begrenzt schwenkbar gelagert, mit dem der Bügel innerhalb des Tragkörpers festlegbar ist. Der Sperrkörper ist durch einen Sicherungskörper (8) in Schließstellung gesichert, so daß ein unbeabsichtigtes Öffnen der Verbindung ausgeschlossen ist. Weiterhin ist eine Betätigungsvorrichtung (15, 16) zur Freigabe des Bügels vorgesehen.

## Beschreibung

Die Erfindung betrifft eine Vorrichtung zum lösbaren Verbinden mit einem Bügel, insbesondere ein Schloß für einen Aufsatz-Kindersitz, einen Kindersitzadapter oder dergleichen zur lösbaren Festlegung in einem Kraftfahrzeug, gemäß den im Oberbegriff des Anspruches 1 angegebenen Merkmalen.

Im Zuge der ständig wachsenden Sicherheitsanforderungen von Kraftfahrzeugen setzt sich zunehmend ein starres Befestigungssystem für Aufsatz-Kindersitze anstelle der bisherigen Gurtbefestigung derselben durch, da nur hierdurch eine definierte Sitzanordnung innerhalb des Fahrzeuges gewährleistet werden kann. Derartige Systeme sind beispielsweise aus EP 0 619 201 A1 oder EP 0 703 113 A2 bekannt. Während dort noch vier Anlenkpunkte in Form von Bügeln beschrieben sind, an denen eine entsprechende Vorrichtung des Kindersitzes angreifen muß, hat sich heutzutage als Standard die Anordnung von zwei Bügeln etwa in dem Bereich, wo Rückenlehne und Sitzlehne aufeinanderstoßen, durchgesetzt.

Unter Bügel in diesem Sinne ist mindestens ein Querbolzen zu verstehen, an dem ein entsprechendes Schloß eines Aufsatz-Kindersitzes, eines Adapters für einen solchen Kindersitz oder dergleichen lösbar festgelegt werden kann.

An derartige Schlösser bzw. Vorrichtungen, von denen üblicherweise zwei an einem Aufsatz-Kindersitz vorgesehen sind, werden heutzutage hohe Anforderungen gestellt. Zum einen muß sichergestellt sein, daß auch bei komplexen Unfallsituationen, wo nachfolgend oder gleichzeitig aus unterschiedlichsten Richtungen hohe Beschleunigungen auftreten, die Schließstellung, d. h. die Verbindung zwischen Bügel und Schloß zuverlässig erhalten bleibt. Andererseits soll die Vorrichtung einfach zu bedienen sein, d. h. selbsttätig schließen und durch einfache Handbetätigung ggf. öffnen. Schließlich soll die Vorrichtung möglichst kostengünstig herstellbar sein.

Bei dem aus EP 0 619 201 A1 bekannten Schloß kann es unter ungünstigen Belastungsumständen, d. h insbesondere wenn vor dem eigentlichen Belastungsfall, bei dem im wesentlichen Zugkräfte auf den Bügel überzuleiten sind, hohe Querbeschleunigungen auftreten, dazu kommen, daß der Sperrkörper die ihn in der Schließstellung haltende Federkraft überwindet und den Bügel unbeabsichtigt freigibt. Darüber hinaus ist das dort insbesondere anhand der Figuren 7 bis 9 dargestellte Schloß konstruktiv aufwendig, da der Sperrkörper einer intensiven mehrflächigen spanenden Bearbeitung bedarf, während das den Tragkörper bildende Schloßgehäuse eine recht aufwendige mehrteilige Blechkonstruktion darstellt, die zumindest an der Außenseite noch entsprechend fein bearbeitet sein muß, um eine Verletzungsgefahr zu vermeiden. Der den Sperrkörper tragende Bolzen muß an der Innenseite des Tragkörpers festgelegt werden, da sonst die Gefahr des Verlustes oder der Verletzung besteht.

Ausgehend von diesem Stand der Technik liegt der Erfindung die Aufgabe zugrunde, eine gattungsgemäße Vorrichtung so auszubilden, daß einerseits eine zuverlässige Einhaltung der Schließstellung unabhängig von der Belastungsrichtung im Falle eines Unfalls sichergestellt ist, andererseits diese Vorrichtung möglichst einfach und kostengünstig im Aufbau ist.

Diese Aufgabe wird gemäß der Erfindung durch die im kennzeichnenden Teil des Anspruchs 1 angegebenen Merkmale gelöst. Vorteilhafte Ausgestaltungen der Erfindung ergeben sich aus den Unteransprüchen sowie aus der nachfolgenden Beschreibung nebst Zeichnung.

Demgemäß sieht die Erfindung vor, den Sperrkörper mittels eines gesonderten Sicherungskörpers in Schließstellung zu sichern, damit auch bei komplexen Belastungsfällen, wie sie bei Unfällen im Straßenverkehr vorkommen können, die Schließstellung des Sperrkörpers und somit die Verbindung zwischen Schloß und Bügel zuverlässig sichergestellt werden kann.

Besonders vorteilhaft ist es, den begrenzt schwenkbar gelagerten Sperrkörper durch einen Sicherungskörper zu beaufschlagen, der lediglich verschiebbar am Tragkörper gelagert ist, wobei die Verschieberichtung so gewählt sein sollte, daß sie etwa im 90° Winkel zur Drehachse des Sperrkörpers liegt. So kann auf einfache Weise der Sperrkörper in seiner Schließstellung gesichert werden, wobei bei geeigneter und zugleich einfacher Formgebung dieser Bauteile eine gegenseitige Selbsthemmung oder gar eine Kraftverstärkung in Schließrichtung bzw. Sicherungsstellung erreicht werden kann.

Bei bekannten Konstruktionen ist der Sperrkörper in Schließrichtung federkraftbeaufschlagt, um ein selbsttätiges Schließen des Schlosses nach Einführen des Bügels sicherzustellen. Da die erfindungsgemäße Lösung zum Sichern des Sperrkörpers einen gesonderten Sicherungskörper vorsieht, kann diese Schließkraft über eine Federbeaufschlagung des Sicherungskörpers eingebracht werden, wohingegen zwischen Tragkörper und Sperrkörper eine den Sperrkörper in Richtung auf seine Öffnungsstellung beaufschlagende Feder angeordnet ist. Der Sperrkörper öffnet dann also selbsttätig, sobald der Sicherungskörper entgegen Federkraft zurückgezogen wird. Diese erfindungsgemäße Konstruktion ermöglicht einen schlanken Schloßaufbau mit wenigen und kostengünstig zu fertigenden Bauteilen.

Um festzustellen, ob das Schloß ordnungsgemäß mit dem Bügel verbunden ist - dieser Bereich ist im Fahrzeug aufgrund seiner Anordnung zwischen Sitz und Rückenlehne in der Regel nur schwer einsehbar - ,ist neben dem Sicherungskörper ein weiterer Körper innerhalb des Tragkörpers geführt, der durch Federkraft in Richtung zum Vorderende des Schlosses begrenzt verschiebbar ist. In einer ersten Ausführungsform arbeitet dieser weitere Körper mit dem fahrzeugeigenen Bügel zusammen. Der in das Schloß eingeführte Bügel schiebt diesen weiteren Körper zurück, so daß dieser Körper an der Rückseite des Schlosses ein Stück austritt und somit die Bügelstellung durch einfache Anbringung von Markierungen sichtbar gemacht werden kann.

In einer weiteren Ausführungsform wirkt der weitere Körper mittelbar und lose mit dem Sperrkörper zusammen, indem er mittels Federkraft gegen den Sicherungskörper gedrückt wird, der wiederum an dem Sperrkörper anliegt. Hierdurch werden die Offen- und die Schließstellung des Sperrkörpers zuverlässig angezeigt, und bei Zugkraft auf den weiteren Körper entsteht keine entsichernde Wirkung auf den Sicherungskörper.

Sofern gewünscht, kann im äußeren Bereich des jeweiligen weiteren Körpers auch ein entsprechender Signalaufnehmer angebracht sein, der diese Stellung entweder mechanisch oder in sonstiger Weise zu einer Stelle überträgt, die gut einsehbar ist. Der Hub dieses Teils des rückseitig des Schlosses austretenden Körpers kann darüber hinaus auch zur mechanischen oder anderweitigen Steuerung beispielsweise dergestalt herangezogen werden, daß ein Signal nur dann abgegeben wird, wenn beide Schlösser eines Sitzes in Schließstellung sind oder daß beispielsweise die Schließfunktion der Gurtschlösser so lange geperrt ist, bis der Kindersitz mit seinen Schlössern vorschriftsmäßig an den Bügeln des Fahrzeugs angeschlossen ist.

Die erfindungsgemäße Schloßkonstruktion kann mit wenigen kostengünstig herzustellenden Bauteilen realisiert werden. Hierzu ist es insbesondere von Vorteil, wenn der Tragkörper als einstückiges Blechformteil ausgebildet ist, d. h. nach Stanzen und Biegen seine endgültige Form hat. In gleicher Weise kann der Sperrkörper als vorzugsweise gestanztes Blechteil ausgebildet sein, wobei dieser zweckmäßigerweise auf einen Metallbolzen schwenkbar gelagert ist, der seinerseits wiederum in seitlichen Ausnehmungen des Trägkörpers geführt ist. Bevorzugt weist auch der Sicherungskörper einen Metallbolzen auf, der in seitlichen Langlöchern des Trägkörpers geführt ist. Eine solche Konstruktion ist nicht nur fertigungstechnisch günstig, sondern auch aus Sicherheitsgründen, da sämtliche im Belastungsfalle kraftaufnehmenden Bauteile aus Stahl oder einem anderen ähnlich hohe Festigkeit aufweisenden Werkstoff bestehen können, während die übrigen Bauteile keinen unmittelbaren Belastungskräften ausgesetzt sind und daher ausschließlich nach herstellungs- und montagetechnischen Gesichtspunkten optimiert werden können. So kann beispielsweise der Körper, der die Stellung des Bügels innerhalb der Vorrichtung erfaßt oder der übrige Teil des Sicherungskörpers als Kunststoffspritzgußteil ausgebildet sein, bei dem vergleichsweise komplizierte Formen kostengünstig realisiert werden können.

Die in den Langlöchern bzw. Ausnehmungen seitlich im Tragkörper geführten Bolzen können mit geringem Spiel dort eingesetzt sein und bedürfen keiner weiteren Befestigung oder Sicherung, wenn der Tragkörper an seiner Außenseite mit einer vorzugsweise von vorne aufschiebbaren Kunststoffkappe verkleidet ist. Diese Kunststoffkappe sichert also die innerhalb des Tragkörpers geführten Bolzen gegen Herausfallen und gibt der Vorrichtung gleichzeitig ein glattes und vergleichsweise weiches Äußeres, so daß auf eine Oberflächenbearbeitung des Tragkörpers an der Außenseite vollständig verzichtet werden kann.

Der Sperrkörper sollte bevorzugt so ausgebildet sein, daß er in Schließstellung bei einem normalen Belastungsfall, d. h. wenn auf den Bügel Zugkräfte übertragen werden, der Bolzen des Sicherungskörpers quer zur Verschieberichtung kraftbeaufschlagt wird, um so die Sicherungsstellung des Sicherungskörpers im Tragkörper kraftmäßig zu unterstützen.

Um das Schloß zu öffnen, ist lediglich der Sicherungskörper in Richtung vom Bügel weg zu schieben, wonach, wenn der Sperrkörper außer Eingriff mit dem Bolzen des Sicherungskörpers gelangt, dieser durch Federkraft in Öffnungsstellung schwenkt, wobei die Kontur des Sperrkörpers bevorzugt so ausgeformt ist, daß die Vorrichtung in Öffnungsstellung verrastet, bis wieder ein Bügel eingeführt und verriegelt wird. Da das Schloß selbst in eingebauter Form auch rückseitig nur schwer zugänglich ist, wird zweckmäßigerweise rückseitig eine Betätigungsvorrichtung in Form einer Stange oder bevorzugt eines Bowdenzuges vorgesehen, mit der der Sicherungskörper zurückgezogen werden kann. Ein Vorschieben in Gegenrichtung erfolgt durch Federkraft, ausgelöst durch Einschieben des Bügels.

Die Erfindung ist nachfolgend anhand eines in der Zeichnung dargestellten Ausführungsbeispiels näher erläutert. Es zeigen:
- Fig. 1: in schematischer Darstellung einen Längsschnitt durch ein erfindungsgemäßes Schloß in Öffnungsstellung,
- Fig. 2: das Schloß gemäß Fig. 1 in Schließstellung mit eingeführtem Bügel in Darstellung gemäß Fig. 1,
- Fig. 3: eine Draufsicht auf das Schloß gemäß Fig. 2 ohne Bügel und ohne Verkleidungskappe,
- Fig. 4: eine Ansicht von vorne ohne Verkleidungskappe,
- Fig. 5: einen Längsschnitt durch eine abgeänderte Ausführungsform,
- Fig. 6: eine Draufsicht auf die Ausführungsform nach Fig. 5.

Das anhand der Figuren dargestellte Schloß besteht aus einem Tragkörper 1, der aus einem gestanzten Blechteil, das zu einem im Querschnitt im wesentlichen U-förmigen langgestreckten Körper gebogen ist. In diesem Tragkörper 1 ist in den Seitenflächen sich ein nach vorne hin erweiternder, in Seitenansicht etwa V-förmiger Ausschnitt gebildet, welcher eine Öffnung 2 des Schlosses bildet. Weiterhin sind in den Seitenwänden des Tragkörpers 1 zueinander fluchtende, kreisförmige Ausnehmungen 3 vorgesehen welche einen Bolzen 4 führen, auf dem ein Sperrkörper 5 schwenkbar gelagert ist.

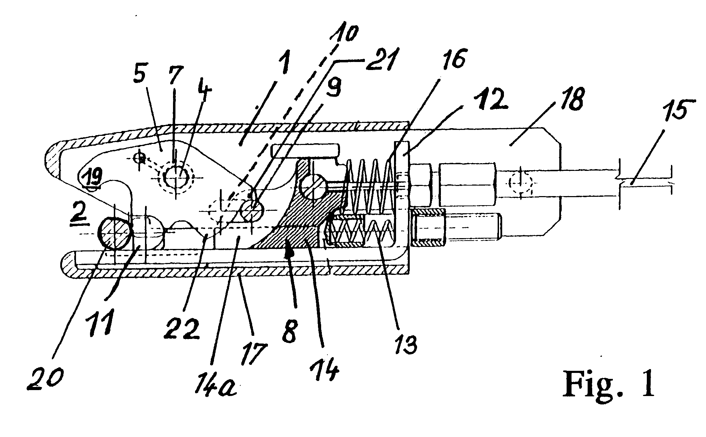

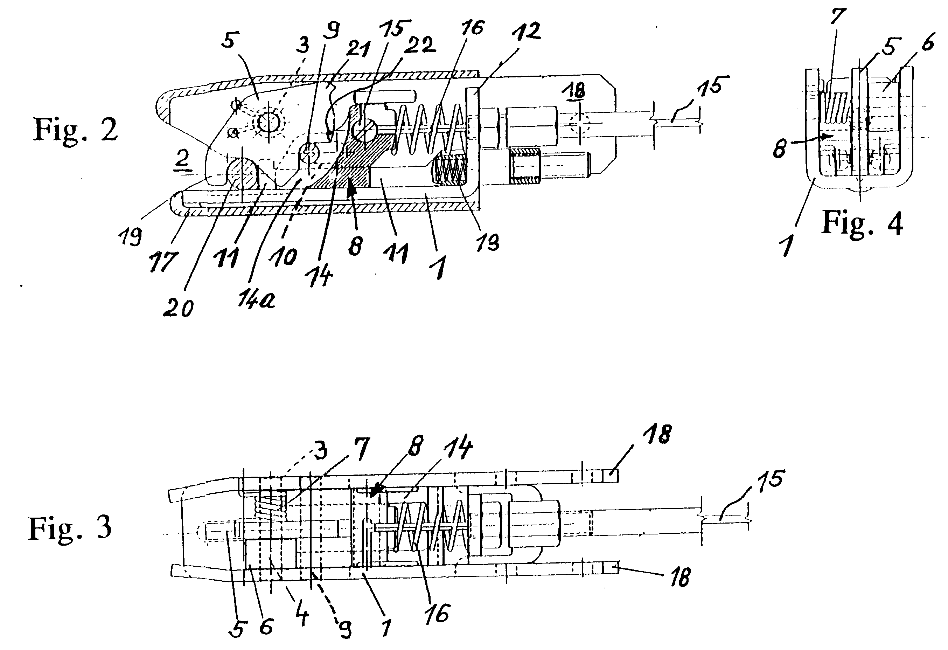

Der Sperrkörper 5 hat die aus den Figuren 1 und 2 ersichtliche Außenkontur und ist als Stanzteil gefertigt. Zwischen den Seitenwandungen des Tragkörpers 1 ist er zentriert einerseits durch eine Distanzhülse 6 und andererseits durch eine Torsionsschraubenfeder 7, deren Enden einerseits im Sperrkörper 5 und andererseits im Tragkörper 1 in entsprechenden Löchern festgelegt sind. Die Torsionsfeder 7 ist so ausgebildet und angeordnet, daß ihre Federkraft den Sperrkörper 5 aus der in Fig. 2 dargestellten Schließstellung in die in Fig. 1 dargestellte Öffnungsstellung verbringt.

Innerhalb des Tragkörpers 1 ist weiterhin ein Sicherungskörper 8 begrenzt verschiebbar geführt. Der Sicherungskörper liegt hinter dem Sperrkörper 5. Der Sperrkörper 5 wird in einer Nut 14a des Sicherungskörpers 8 geführt. Der Sicherungskörper 8 trägt einen parallel zum Bolzen 4 verlaufenden Bolzen 9, der nahe seinen Enden in Langlöchern 10 der Seitenwände des Tragkörpers 1 geführt ist.

Innerhalb des Tragkörpers 1 ist ein weiterer Körper 11 als Anzeigestab ebenfalls in Längsrichtung des Tragkörpers 1 begrenzt beweglich geführt Dieser Anzeigestab durchsetzt den unteren Teil des Sicherungskörpers 8 unterhalb des Bolzens 9 und reicht nach vorne hin bis in die Öffnung 2. Nach hinten durchsetzt er eine zum Tragkörper 1 gehörige rückseitige Stirnwand 12. Eine den weiteren Körper 11 umgebende Druckfeder 13 bewegt diesen Körper 11 in die in Fig. 1 sichtbare vordere Endstellung, wobei in Fig. 2 die hintere Endstellung sichtbar ist, in der die Druckfeder 13 gespannt ist.

Die eigentliche Sicherung des Schlosses erfolgt durch den Bolzen 9. Dieser wird jedoch über ein ebenfalls zum Sicherungskörper 8 gehörendes Kunststoffspritzgußteil 14 mit dem Ende eines Bowdenzugs 15 verbunden, dessen Hülse an der rückseitigen Stirnwand 12 festgelegt ist. Über diesen Bowdenzug erfolgt die Betätigung des Schlosses. Zwischen den, Spritzgußteil 14 und der rückseitigen Stirnwand 12 des Tragkörpers 1 ist darüber hinaus eine weitere Schraubendruckfeder 16 vorgesehen, die dafür sorgt, daß der Sicherungskörper 8 stets in Richtung auf den Sperrkörper 5 kraftbeaufschlagt ist, also nur bei Zug am Bowdenzug 15 innerhalb des Tragkörpers 1 verschoben wird, und zwar nach hinten.

Der Tragkörper 1 ist durch eine von vorne aufgeschobene Kunststoffkappe 17 verkleidet, welche neben der Verkleidungsfunktion auch dafür sorgt, daß die Bolzen 4 und 9 formschlüssig innerhalb des Tragkörpers 1 geführt sind.

Die Anbringung des Schlosses am Kindersitz oder an einem Adapter für einen Kindersitz kann beispielsweise über in den Figuren hinten dargestellte Zungen 18 des Tragkörpers 1 erfolgen oder in anderer geeigneter Weise nach Bedarf. Die Funktion des Schlosses ist wie folgt:

Durch die aus der Zeichnung ersichtliche Formgebung der Außenkontur des Sperrkörpers 5 verbleibt dieser, wenn der Sicherungskörper 8 mittels des Bowdenzugs 15 einmal entgegen Federkraft der Feder 16 zurückgezogen worden ist, rastend in der geöffneten Stellung (s. Fig. 1). In dieser Stellung ist eine vordere Sperrklinke 19 des Sperrkörpers 5, welche zur Festlegung eines fahrzeugeigenen Bügels 20 dient aus dem Bereich der Öffnung 2 nach oben geschwenkt. Eine rückseitige Rastklinke 21 des Sperrkörpers 5 liegt an, Bolzen 9 an. In dieser Stellung wird der Sperrkörper 5 durch die Kraft der Torsionsfeder 7 gehalten. Der Sicherungskörper 8 kann aufgrund der Rastklinke 21 nicht nach vorne geschoben werden.

Zum Verbinden des Schlosses wird dieses mit der Öffnung 2 auf den Bügel 20 geschoben, wobei der Bügel 20 entgegen Federkraft den Sperrkörper 5 um den Bolzen 4 in Fig. 2 entgegen dem Uhrzeigersinn dreht, wodurch die Sperrklinke 19 die Öffnung 2 mit dem darin liegenden Bügel 20 schließt und der Bolzen 9 nach Übenwinden eines Vorsprungs 22 des Sperrkörpers 5 zusammen mit dem Gußteil 14 in seine vordere, den Sperrkörper sichernde Stellung fährt (Fig. 2). In dieser Stellung ist der Bügel 20 durch die Sperrklinke 19 formschlüssig gesichert. Der Sperrkörper 5 selbst ist durch den Bolzen 9 des Sicherungskörpers 8 gegen jegliche Drehbewegung gesichert, wobei aufgrund der Formgebung des Sperrkörpers 5 in diesem Bereich sichergestellt ist, daß im Belastungsfall, d. h. wenn eine hohe Zugkraft vom Schloß auf den Bügel 20 übertragen werden muß, der Sperrkörper 5 im Uhrzeigersinn zu drehen versucht, wodurch der Bolzen 9 in Querrichtung belastet und somit zusätzlich kraftschlüssig am Tragkörper 1 festgelegt wird. Die Entriegelung erfolgt in analoger Weise durch Betätigung des Bowdenzugs 15, wodurch der Bolzen 9 zurückgezogen wird und die Klinke 19 zurückschwenken kann, und Abziehen des Schlosses vom Bügel.

Die Stellung des Schlosses, d. h. ob ein Bügel darin liegt oder nicht, kann mittels des weiteren Körpers 11 als Anzeigestab ermittelt werden. Dieser ist hierzu an seinem hinteren, aus der rückseitigen Stirnwand 12 des Tragkörpers 1 herausragenden Ende z. B. farblich markiert, so daß je nach Stellung des Stabes die Bügelstellung innerhalb des Schlosses erkennbar ist. Das hintere Ende dieser Stange ist so innerhalb des Tragkörpers geführt, daß eine Verlängerung aufschraubbar ist, so daß eine Übertragung dieser Anzeige zur Vorderseite des Sitzes hin erfolgen kann, beispielsweise mit Hilfe eines daran angebrachten elastischen Mantels mit darin geführter elastischer Stange.

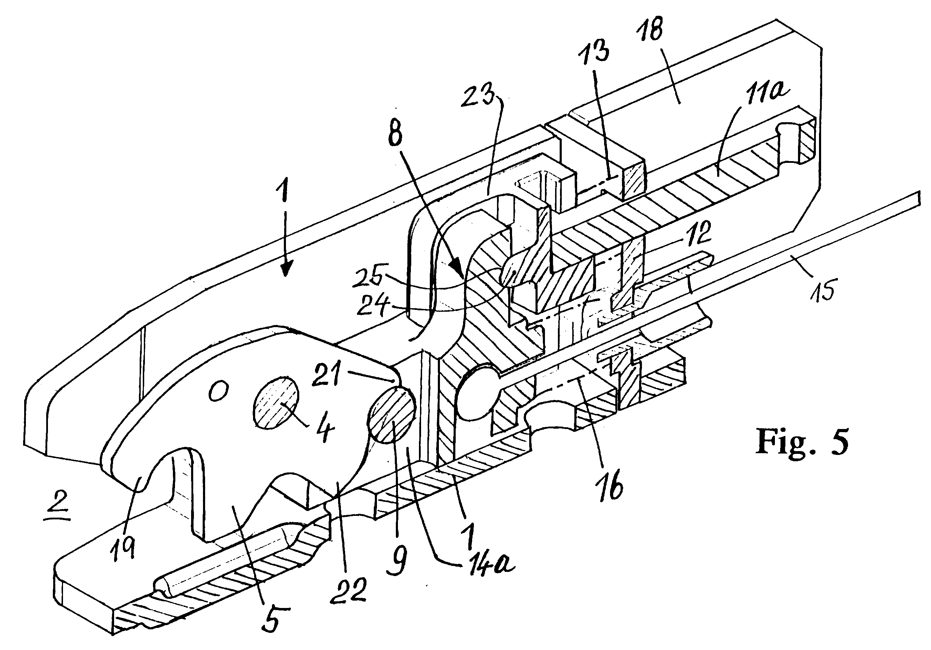

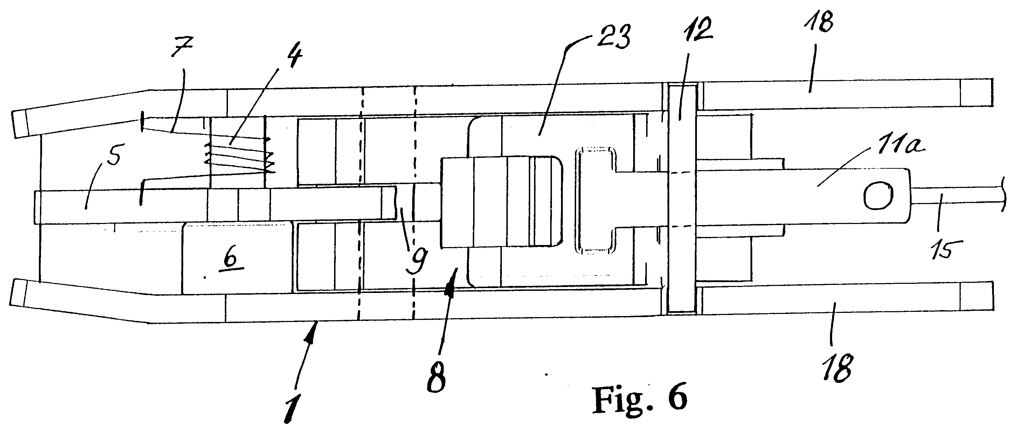

Eine abgeänderte Form des weiteren Körpers als Anzeigestab ist in den Fig. 5 und 6 gezeigt, worin für gleiche Bestandteile der Vorrichtung gleiche Bezugszeichen gelten. Innerhalb des Tragkörpers 1 erstreckt sich der weitere Körper 11a von dem Sicherungskörper 8 nach rückwärts durch die rückwärtige Stirnwand 12 des Tragkörpers 1 hindurch, die den stabförmigen weiteren Körper führt. Der Körper 11a ist zunächst durch Formschluß mit einem gabelförmig ausgebildeten Gleitstück 23 verbunden, das auf dem Sicherungskörper 8 gleitend gelagert ist, wie es den Fig. 5 und 6 entnehmbar ist. Das Gleitstück 23 liegt des weiteren lose an dem Sicherungskörper 8 an, und zwar beispielsweise über einen Ansatz 24, der lose in eine Vertiefung 25 des Sicherungskörpers 8 eingreift. Bei diesem Beispiel wird die jeweilige Stellung der Sperrklinke 19 des Sperrkörpers 5 in dessen Endstellungen zuverlässig angezeigt. Durch die mittelbare lose Anbindung des weiteren Körpers 11a an dem Sicherungskörper 8 ist ferner bei Zugkrafteinwirkung auf dem weiteren Körper keine Entsicherung des Sperrkörpers 5 möglich, weil sich der weitere Körper bzw. das Gleitstück vom Sicherungskörper löst bzw. wegbewegt, der Sicherungskörper selbst somit seine Sicherungsstellung beibehält. Im übrigen kann das rückwärtige Ende des weiteren Körpers 11a ebenfalls mit einem Signalaufnehmer usw. zusammenwirken, wie es weiter vorstehend in Verbindung mit der ersten Ausführungsform des weiteren Körpers beschrieben ist.

### Bezugszeichenliste

- 1 -: Tragkörper
- 2 -: Öffnung
- 3 -: Ausnehmungen für Bolzen 4
- 4 -: Bolzen
- 5 -: Sperrkörper
- 6 -: Distanzhülse
- 7 -: Torsionsschraubenfeder
- 8 -: Sicherungskörper
- 9 -: Bolzen des Sicherungskörpers
- 10 -: Langlöcher im Tragkörper
- 11 -: Anzeigestab
- 11a -: Anzeigestab
- 12 -: rückseitige Stirnwand des Tragkörpers
- 13 -: Druckfeder
- 14 -: Gußteil des Sicherungskörpers
- 14a -: Nut des Sicherungskörpers
- 15 -: Bowdenzug
- 16 -: Schraubendruckfeder
- 17 -: Kunststoffkörper
- 18 -: Zungen des Tragkörpers
- 19 -: Sperrklinke
- 20 -: Bügel
- 21 -: Rastklinke
- 22 -: Vorsprung
- 23 -: Gleitstück
- 24 -: Ansatz
- 25 -: Vertiefung

## Patentansprüche

1. Vorrichtung zum lösbaren Verbinden mit einem Bügel, insbesondere Schloß für einen Aufsatzkindersitz, einen Kindersitzadapter oder dgl. zur lösbaren Festlegung in einem Kraftfahrzeug, mit einem Tragkörper (1), der mindestens eine Öffnung (2) zur Aufnahme des Bügels (20) aufweist, mit einem innerhalb des Tragkörpers (1) begrenzt schwenkbar gelagerten Sperrkörper (5) zum Festlegen des Bügels (20) innerhalb des Tragkörpers (1) und mit Mitteln zur Freigabe des Bügels, dadurch gekennzeichnet, daß der Sperrkörper (5) in Schließstellung durch einen diese Stellung sichernden Körper (8) (Sicherungskörper) beaufschlagt ist.

2. Vorrichtung nach Anspruch 1, dadurch gekennzeichnet, daß der Sicherungskörper (8) verschiebbar am Tragkörper (1) gelagert ist, wobei die Verschieberichtung im 90° Winkel zur Drehachse (4) des Sperrkörpers (5) liegt.

3. Vorrichtung nach einem der vorhergehenden Ansprüche, dadurch gekennzeichnet, daß der Sperrkörper (5) in Richtung auf seine Öffnungsstellung federkraftbeaufschlagt ist.

4. Vorrichtung nach einem der vorhergehenden Ansprüche, dadurch gekennzeichnet, daß der Sicherungskörper (8) in Richtung auf den Sperrkörper (5) federkraftbeaufschlagt ist.

5. Vorrichtung nach einem der vorhergehenden Ansprüche, dadurch gekennzeichnet, daß der Tragkörper (1) als einstückiges Blechformteil ausgebildet ist.

6. Vorrichtung nach einem der vorhergehenden Ansprüche, dadurch gekennzeichnet, daß der Sperrkörper (5) als vorzugsweise gestanztes Blechteil ausgebildet ist und auf einem Bolzen (4) schwenkbar gelagert ist, der in seitlichen Ausnehmungen des Tragkörpers (1) geführt ist.

7. Vorrichtung nach einem der vorhergehenden Ansprüche, dadurch gekennzeichnet, daß der Sicherungskörper (8) einen Bolzen (9) aufweist, der in seitlichen Langlöchern (10) des Tragkörpers (1) geführt ist.

8. Vorrichtung nach einem der vorhergehenden Ansprüche, dadurch gekennzeichnet, daß der Sperrkörper (5) so ausgebildet ist, daß er in Schließstellung im Belastungsfall den Bolzen (9) des Sicherungskörpers (8) quer zur Schieberichtung kraftbeaufschlagt.

9. Vorrichtung nach einem der vorhergehenden Ansprüche, dadurch gekennzeichnet, daß der Tragkörper (1) mit einer vorzugsweise aus Kunststoff bestehenden Kappe (17) verkleidet ist, welche die im Tragkörper (1) geführten Bolzen (4, 9) formschlüssig in ihrer Stellung hält.

10. Vorrichtung nach einem der vorhergehenden Ansprüche, dadurch gekennzeichnet, daß am Sicherungskörper (8) ein Bowdenzug (15) oder anderes Betätigungselement angebracht ist.

11. Vorrichtung nach einem der vorhergehenden Ansprüche, dadurch gekennzeichnet, daß innerhalb des Tragkörpers (1) und neben dem Sicherungskörper (8) ein weiterer Körper (11) geführt ist, dessen Stellung durch die Stellung des Bügels (20) bestimmt ist und der Teil einer Einrichtung ist, mit der die Stellung des Bügels innerhalb der Vorrichtung erfaßbar ist.

12. Vorrichtung nach Anspruch 11, dadurch gekennzeichnet, daß der weitere, innerhalb des Tragkörpers (1) geführte Körper (11) auf der dem Bügel (20) abgewandten Seite des Tragkörpers herausragt.

13. Vorrichtung nach einem der vorangegehenden Ansprüche 1 bis 10, dadurch gekennzeichnet, daß innerhalb des Tragkörpers (1) ein loser, sich von demSicherungskörper (8) nach rückwärts erstreckender, weiterer Körper (11a) geführt ist, dessen Stellung durch die Stellung des Sperrkörpers (5) bestimmt ist und der ein Teil einer Einrichtung ist, mit der die Stellung des Sperrkörpers innerhalb der Vorrichtung anzeigbar ist.

14. Vorrichtung nach Anspruch 13, dadurch gekennzeichnet, daß der weitere Körper (11a) mit einem einer Federdruckkraft inRichtung zu dem Sicherungskörper (8) unterliegenden Gleitstück (23) verbunden ist das an dem Sicherungskörper gleitend gelagert ist.

15. Vorrichtung nach Anspruch 13 oder 14, dadurch gekennzeichnet, daß der weitere, innerhalb des Tragkörpers (1) geführte Körper (11a) auf der dem Sperrkörper (5) abgewandten Seite des Tragkörpers herausragt.
